Europäisches Patentamt

(19) European Patent Office

Office européen des brevets

(11) Publication number: **0 048 596**
**B1**

(12) **EUROPEAN PATENT SPECIFICATION**

(45) Date of publication of patent specification: **18.12.85**

(51) Int. Cl.⁴: **C 02 F 1/04**

(21) Application number: **81304275.1**

(22) Date of filing: **17.09.81**

(54) **Apparatus for removing salts and foreign matter from liquids (water).**

(30) Priority: **18.09.80 US 188347**

(43) Date of publication of application:
**31.03.82 Bulletin 82/13**

(45) Publication of the grant of the patent:
**18.12.85 Bulletin 85/51**

(84) Designated Contracting States:
**FR GB NL**

(56) References cited:
**US-A-2 971 897**
**US-A-3 558 436**
**US-A-3 736 234**
**US-A-4 113 571**

(73) Proprietor: **Parker, Sidney A.**
**5820 Diamond Oaks Drive**
**Fort Worth Texas 76117 (US)**

(72) Inventor: **Parker, Sidney A.**
**5820 Diamond Oaks Drive**
**Fort Worth Texas 76117 (US)**

(74) Representative: **Livsey, Gilbert Charlesworth**
**Norris et al**
**HYDE, HEIDE & O'DONNELL 146 Buckingham**
**Palace Road**
**London SW1W 9TR (GB)**

Courier Press, Leamington Spa, England.

## Description

This invention relates to a system for purifying liquids.

In earlier United States Patent Specification No. 3 558 436, it has been proposed to desalinate water in an evaporator operating at ambient temperatures and to condense the vapour formed to provide distilled water. The evaporation is effected at a reduced pressure sufficient to boil the water at near ambient temperatures, means being provided to maintain the necessary partial vacuum in the evaporator and condenser. In this known proposal, the vacuum may be provided with the aid of two barometric legs or columns providing a liquid head of about 10 metres. The columns are connected at their heads while at their feet they sit in respective reservoirs, one containing water to be purified and the other containing purified water. The reservoirs constitute liquid seals sustaining the barometric legs, the tops of the columns being closed to atmosphere. According to this prior proposal the columns are filled and the vacuum is maintained by a vacuum pump which evacuates the upper region of the condenser leg and discharges to the fresh water reservoir at the foot of the leg.

The present invention has for its object to provide an improved system of this general type. Principal objects are to provide improved filling, discharge of non-condensible gases and the prevention of intermingling of pure and impure liquids.

The present invention provides a method and apparatus for purifying liquids which is defined in Claims 1 and 4 and their appendent claims.

Broadly, the system includes two barometric legs or columns as in the earlier proposal, but according to the invention means are provided for sequentially filling the two columns and for venting non-condensibles with special provision for avoiding or at least reducing the admixing of the pure and impure liquids.

In a system according to an embodiment of the invention employing two vertical columns of water, one impure and the other single stage distilled liquid, the method of operation is to cycle liquids from their respective lower reservoirs (forming liquid seals) to the top of the respective columns. Specifically, purified water is first pumped from a purified water reservoir to the top of a second column where all non-condensibles are vented to the atmosphere, then pump means for the impure water is activated and the impure water is pumped from an impure water reservoir to the top of the first column where all remaining non-condensibles from the first columns, as well as the duct means providing vapour crossover, are vented to the atmosphere. The duct means, while providing for vapour crossover, has a device for selectively isolating the liquid in the first vertical elongated column from the liquid in the second vertical elongated column. Said vapour-liquid isolation means prevents cross contamination between the second vertical column of purified water and first vertical elongated column of impure water when cycling and recharging the distillation plant.

The first and second elongated columns stand in the respective impure and purified water reservoirs which function also as a liquid seal means at the base of each column.

The distillation plant can have a self cleaning internal device to maintain good heat transfer and should be kept relatively free of deposits in the first column which performs the conversion of liquid to vapour of the media (water) for distillation.

Back flushing of the feedstock may be performed in the first vertical column when it will be essentially freed of most water borne living organisms. The distilled vapour in the duct means may be irradiated in order to destroy bacteria.

This invention also encompasses sensor or other control means for said first vertical elongated column or columns and second vertical elongated column or columns for operatively sequentially controlled valves or pump means and for adjusting pressures or temperature of liquids or vapours in said vertical columns.

Other objects and advantages of the present invention will be made more apparent hereinafter.

There is illustrated in the attached drawings presently preferred embodiments of the present invention, wherein

Figure 1 shows one form of the present invention illustrating the essential components thereof and the relationship between the two substantially vertical columns.

Figure 2 illustrates a modification of the system of Figure 1; and

Figure 3 illustrates yet another modification of Figure 1 and Figure 2; and

Figure 4 illustrates yet another modification of Figures 1, 2 and 3; and

Figure 5 also illustrates yet another modification of Figures 1, 2, 3 and 4.

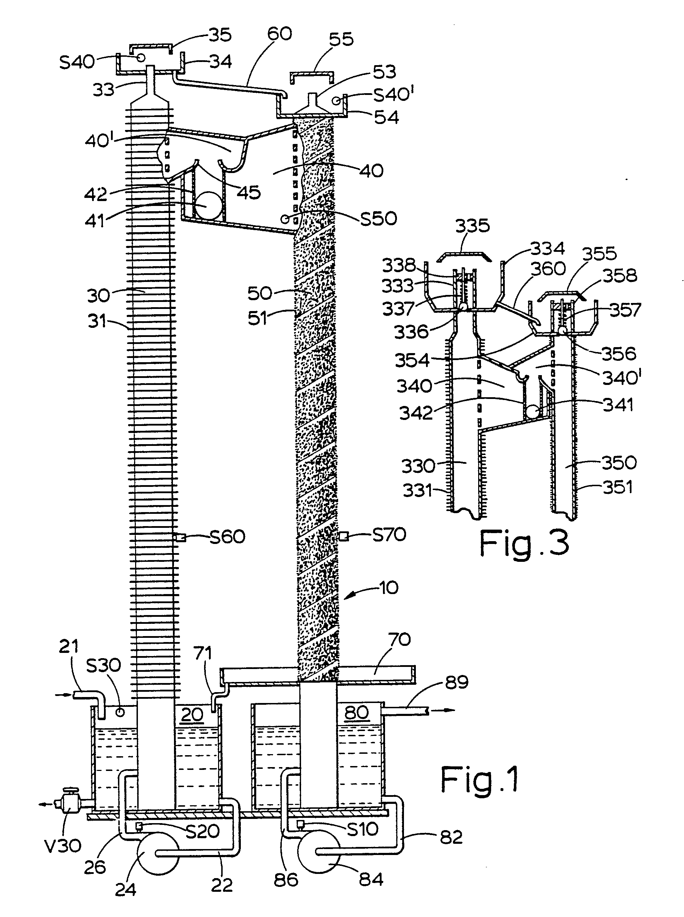

Referring now to Figure 1, there is illustrated an apparatus 10 for removing salts and foreign matter from liquids, and more importantly, for making potable water from brackish water.

Referring to Figure 1, the distillation system comprises two substantially vertical columns 30 and 50. The height of each of columns 30 and 50 is in the order of 12 to 20 metres (for water) in a substantially vertical position. At the base of column 30 is a liquid seal 20 which also acts as a reservoir for the impure water to be distilled. Liquid seal 80 in a reservoir of purified water acts as a liquid seal for column 50. Pipe means 21 supplies reservoir 20 with new feedstock and pipe means 89 provides purified water from the reservoir constituting liquid seal 80.

Surrounding column 50 is a wettable substance 51 which also has embedded or impregnated therein one of the common salts such as sodium chloride (NaCl) or Fuller's earth special porous ceramic or any other substance which will absorb and act as a water wicking agent. Column 30 may be painted black and may also have attached finning material 31 to absorb heat radiation from the sun or ambient air. For low temperature geothermal heat, column 30 may be surrounded by a heat exchanger pipe (not shown) attached in such a manner as to add heat to the column 30.

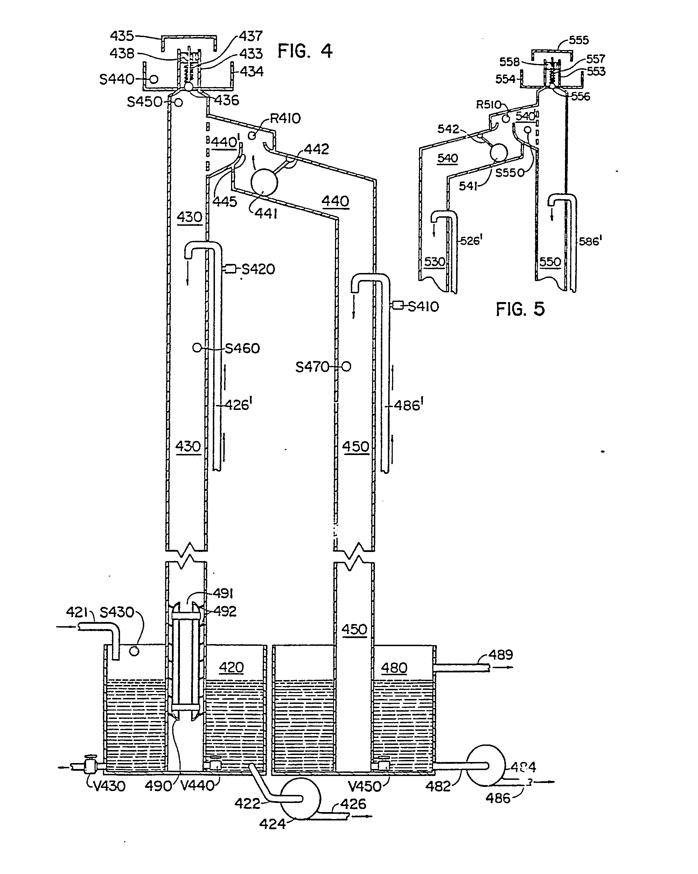

At the top of columns 30 and 50 are ball check valves. As best shown in Figure 3, the ball check valve at the top of column 330 comprises a resilient ball 336 along with spring means 337 and spring retainer 338 for biasing said ball check valve closed in a tight sealing arrangement to an opening in the top of vertical column 330. A similar ball check valve 53 is found at the top of column 50. Note that in Figure 1 a vapor bridge conduit (40, 40' has a caged ball check valve 41 along with guide cage 42 to seal against seat 45.

In operation, the reservoir constituting the liquid seals 20 and 80 are primed to start the distillation plant. First fresh water from the purified water reservoir goes through pipe 82 to a pump 84 and through a pipe 86 to vertical column 50 until the water level reaches the vapor crossover conduit 40. The resilient hollow float ball 41 will rise upward through ball cage 42 and will come to rest and seal in ball seal neck 45. The fresh water in column 50 is sealed off from the vertical column 30 and pump pressure will force noncondensable (gases) through vent ball check valve as best shown as vent valve 356 in Figure 3, corresponding to vent tube 53 at the top of vertical column 50.

After a predetermined time, noncondensable (gases) and fresh water is vented from the top of the vent pipe 53. The water will be caught in a circumferentially upwardly extended trough 54 by deflection shield means 55. Trough 54 has predetermined series of small holes whose outer radius is just greater than the radius of vertical column 50. After vertical column 50 is full of water and all noncondensables have been vented to the atmosphere, the second pump means 24 is started taking impure water from the reservoir which constitutes liquid seal means 20 through a pipe 22 and through pump 24 to fill vertical column 30 through pipe 26.

It is important to note that although vertical columns 30 and 50 are substantially the same height the pressure from pump means 84 is greater than pump means 24 so that when the water from liquid seal and reservoir 20 is forced to the top of vertical column 30 the final pressure which pumps means 24 can deliver is such that it cannot unseat ball check means 41 from ball check seat 45. All noncondensables in column 30 are vented through vent ball check means 33 and a quantity of water flows from the top of vent tube 33. This water will fill a trough 34 at the top of column 30 and the accumulated water will be transmitted through pipe 60 to trough 54 on top of vertical column 50 where it will mix with fresh water and then saturate wet wicking 51.

To provide heat transfer to column 30, the vertical column may be painted black and may also have outwardly extending radial fins which during the daylight hours will act as a radiation collector and at the same time column 50 will approach the wet bulb temperature which will provide a substantial temperature differential between vertical column 30 and vertical column 50.

Then first pump 24 and then soon thereafter pump 84 are turned off. Both pumps 24 and 84 are so constructed that once these pumps are turned off water freely flows through them bidirectionally.

Another important aspect of this invention is that at predetermined times the times pumps, first pump 84 then pump 24 will cycle and repeat the removal of certain vapors and the supply of the feedstock along with the predetermined purging of accumulated salts and solids from column 30 with the aid of a drain valve V30. The overflow of water on wicking 51 will accumulate in catchbasin 70 and be returned to container 20 through pipe 71.

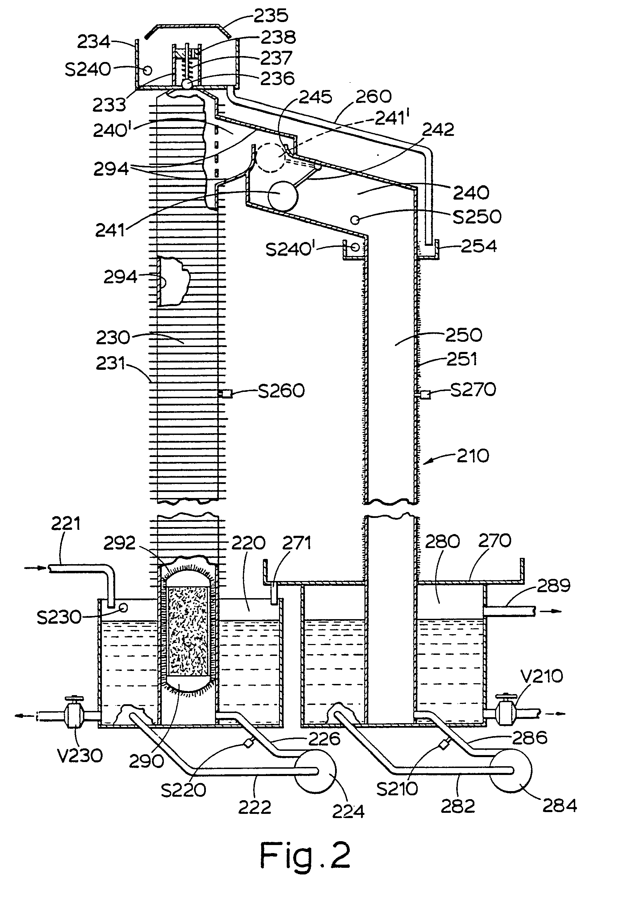

Figure 2 shows another embodiment 210 of the present invention. The embodiment of Figure 2 combines vent purge means in a single vent means at the top of vertical column 230. Added is an optional descaling float means 290 with descaling brush means 292. The sequence of operation is essentially the same as described in Figure 1. Fresh water is in storage container 280 which also acts as a liquid seal means for the second vertical column 250.

Distillation is activated when pump means 284 bring purified water from container 280 through pipe 282 and is pumped through pipe 286 to vertical column 250 where the water rises up column 250 and noncondensables are forced through vapour crossover means 240 and 240' until the water level activates the resilient ball float means 241. Ball float means will rise and seal as shown 241' in an upper position.

Pump 284 continues to maintain liquid pressure against the underside of ball float seal means 241' and seals the water in vertical column 250 and crossover 240 from mixing with impure water in column 230 when pump means 224 is later activated. When pump means 284 reaches a predetermined pressure as may be sensed by sensor S210, pump means 224 is activated which brings impure water from container 220 and liquid is communicated through pipe 222 to pump means 224 where it is supplied to the base of vertical column 230 through pipe 226.

Flat brush means is optional depending on whether the inside of vertical column 230 is coated with a proper release agent which in most instances prevent scaling of the inside 294 of vertical column 230 and vapour crossover means 240'. If proper release coating is not used then pipe scrubber float means 290 with sufficient outwardly extending brush means 292 will rise along with the brackish water on each cycle and scrub the inside walls 294 sufficiently to prevent scaling of salt and other particles from clinging to the inside walls of column 230.

Impure water will be pumped to the top of vertical column 230 and all noncondensables will be vented through resilient ball means 236 which is biased downwardly by spring means 237 pressing against ball check guide means 238 or gravity and the brackish water totally fills 240' and 240.

It may be necessary to always coat vapor crossover means 240' of Figure 2 as well as 40' of Figure 1, 340 of Figure 3, 440' of Figure 4 and 540' of Figure 5 with a proper release coating to prevent build up of solid materials.

In the embodiments of both Figure 1 and Figure 2 all noncondensables are purged from the system and the fresh water pump 84 and 284 always when running are capable of a pressure great enough so that pump 224 and 24 cannot force resilient float seal means 241 and 41 from their positive seal. Pivot lever arm 242 aligns float 241 for positive seal means when in an upwardly sealing position. The flat seal means comes to rest in sealing relationship with seal 245 as shown in Figure 2.

Pump 224 is first turned off at a predetermined time after sufficient water has vented through vent tube 233 to supply troughs 234 and 254. Trough 254 receives the brackish water through drain tube 260 to wet wicking 251.

Sequentially first pump means 224 is turned off and thereafter pump means 284 is turned off. Both pump 224 and 284, when deenergized have bidirectional flow characteristics through them. The earth's gravitational field forces both the impure water in column 230 and the pure water in column 250 to drop downwardly and form a vacuum of such an extent that distillation takes place much as is done in a molecular distillation system.

Again, vertical column 230 is coated black and may also have fins 231 attached to enhance heat transfer to vertical column 230. Vertical column 250 is fitted with a suitable wet wicking 251 so that the surface temperature of vertical column 250 is cooled and sufficient temperature differential is present to maintain rapid distillation of the impure water.

Figure 3 shows essentially a mirror image of the vapor crossover means shown in Figure 1. The object of the reversal of the liquid and vapor seal means ball float 41 and ball float seal means 341 is that since the distillation system runs at such a low absolute pressure if there were no noncondensables being released from the impure water then there would be no need to pump liquid up column 50 or 250 as shown now in Figure 3 as 350. Moreover if there are slight numbers of vapor molecules of noncondensables, these molecules (gas) will be trapped in the upper sections of vertical column 330 thus when it is necessary to purge column 330 of noncondensable gases or descale and recharge column 330 only one pump need be used.

Experience may show that only during some out of many cycles, would pump means for column 350 be needed to purge noncondensables from atop column 350. This is very important when pump means is provided by animal power or by manpower in underdeveloped countries or newly developing countries. Also this scheme conserves external shaft or electrical energy input. The only disadvantage in the reversal of the vapor crossover means is that as vertical column 330 is filled to the top with brackish water without actually mechanically lifting ball float seal means 341 before the brackish water reaches the ball flange seal means there could be slight spill-over of brackish water into the distilled side 340' or vertical column 350.

The distillation system will probably be free running for long periods of time and water will have to be pumped by an external pump not shown to keep the evaporation rate up on the exterior of vertical column 350 wicking 351 for proper wet bulb depression when used.

Figure 4 operates much as Figure 2 with the exception that heat for vertical column 430 can be supplied externally to brackish water leaving pump means 424 through conduit means 426. Low temperature heat being supplied to brackish water leaving pump means 424 through liquid conduit 426 could be low temperature geothermal heat; also similar heat can be supplied by solar collectors, solar ponds (manmade or natural), waste heat from industrial plants, etc.

It is understood that conduits 430, 450, 426' and 486' are insulated, not shown.

Water coming from reservoir 420 through pump means 424, may be sprayed downwardly as shown in Figure 4 below opening of vapor crossover means 440' attached to vertical column 430.

Independently, distilled water in container 480 passes through conduit 482, through pump means 484 exiting through liquid carrying conduit 486, passing through cooling means, not shown, and said cooled distilled liquid may pass through conduit 486' where it is sprayed downwardly below vapor crossover conduit means 440 in vertical column 450 to condense distilled vapors therein.

Sensor means S420 and Sensor means S410 are in pressure sensor relationship to liquid in conduit means 426' and 486' as shown in Figure 4. Sensor S450 located atop column 430 senses when it is necessary to purge noncondensables from the desalinization system. First, valve V450 is closed and vertical column 450 is filled until the liquid closes ball check seal means 441 against ball seal means 445. All noncondensables present in vertical column 450 are exhausted through vapor crossover section 440 through vapor crossover valve seal means 445 into vapor crossover section 440' and vertical columns 430.

Floatable crossover liquid valve seal means 441 will rise and seal against valve seal seat 445. Liquid pressure will increase in vertical column 450 and will be sensed by sensor S410. When pressure within conduit 486' reaches a predetermined setting valve V440 will be closed and vertical column 430 will be filled with impure water.

Floatable descaling means 490 with cleansing means 492 will rise along with the impure water and cleanse the interior of vertical column 430.

The filling of vertical column 430 with impure water will vent to the atmosphere all noncondensables through vent purge valve 436.

Sensor S440 located atop vertical column 430 will sense water level in water containment trough 434 and open valve V440 to allow brackish water in column 430 to drop by gravity below vapor crossover conduit 440' and water spray means located at the end of liquid conduit 426' within vertical column 430. Once valve V440 has allowed the brackish water in vertical column 430 to get below vapor crossover opening 440'; valve V450 will be opened and the distilled water in vertical column 450 will fall by gravity opening vapor crossover valve seal means 441.

The system is now restored to normal operation. Radiator R410 is located in vapor crossover chamber 440' may be employed to irradiated vapours from impure water.

Figure 5 is a mirror image of Figure 4 and operates essentially the same as Figure 4 and Figure 3 already described. All like numbers are preceding by a 500 series, for instance R510 is the same as R410. Likewise 530 and 550 are the same as 430 and 450, etc.

To those skilled in the art it will be obvious that the first column may require (not shown) an atmospheric sequentially controlled inlet valve to be opened when flushing and recharging of first column's media is required from time to time. It should also be obvious to those skilled in the art that pump means at the base of the first and second columns while shown in a unidirectional form can be so constructed to be bidirectional when selectively energized depending whether first or second columns are to be filled or emptied.

It is understood by those skilled in the art that the term fluid or water can be interchanged with other evaporable fluids such as methanol ($CH_3OH$) and ethanol ($C_2H_5OH$) where density and vapor pressure are applicable.

**Claims**

1. A method of distilling liquids, in particular of purifying water, which utilises a barometric distillation system comprising

a first column (30) of predetermined barometric height including energy input means (31);

a second column (50) of predetermined barometric height including energy rejection means (51);

and including a first reservoir (20) for impure liquid and a second reservoir (80) for purified liquid;

and means for selectively providing liquid intercommunication between the lower interior region of the first column (30) and said first reservoir (20) and between the lower interior region of the second column (50) and the second reservoir (80);

first pump means (24) for pumping liquid from the first reservoir to the first column, and

second pump means (84) for pumping liquid from the second reservoir to the second column,

duct means (40) providing inter-communication between upper regions of said first and second columns said duct means being equipped with a check valve device (41) openable to permit flow of vaporized liquid between the columns and closable to prevent flow of liquid between the columns: and means (33, 53) to vent said first and second columns, in upper regions thereof;

the method comprising

employing one of said pump means (24 or 84) to fill one of said columns with liquid from its associated reservoir and simultaneously venting the upper region of that column with said check valve device (41) operating and being closed to prevent flow of liquid into the other said column, and then, subsequently, while maintaining closed said check valve device (41),

employing the other of said pump valves (24 or 84) to fill the other said column with liquid from its associated reservoir and simultaneously venting the upper region of such other column to atmosphere;

subsequently closing said upper regions of both columns to atmosphere and then allowing the liquid heads in both columns to recede under gravity so as to draw a partial vacuum in upper regions in both columns; and opening said check valve to allow vapour communication between the evacuated upper regions of the columns, whereby on a temperature differential becoming established between the two liquid heads in said columns, liquid in said first column will vaporize in said upper region of said first column, the vapour passing thence, through the inter-communicating duct means with the check valve therein said condensing in the cooler second column.

2. A method according to claim 1, wherein said columns are sequentially filled and vented and then have their upper regions partially evacuated, at regular or irregular intervals for the purpose of venting and discharging non condensible gases to prevent an undesirable build-up thereof.

3. A method according to claim 1, wherein when said first and second columns are filled with the respective liquid, the resultant liquid heads exceed 12 metres prior to the closing of the upper region of the columns at atmosphere and the subsequent reduction of said heads under gravity to at least partially evacuate said upper regions of the interiors of the columns.

4. A barometric distillation apparatus for performance of the method defined in claim 1 which comprises

a first column (30) of predetermined barometric height including energy input means (31);

a second column (50) of predetermined barometric height including energy rejection means (51);

and including a first reservoir (20) for impure liquid and a second reservoir (80) for purified liquid;

and means (22, 24, 26) for selectively providing liquid intercommunication between the lower interior region of the first column (30) and said first reservoir (20) and between the lower interior region of the second column (50) and the second reservoir (80);

first means (24) to pump an impure liquid from said first reservoir (20) into said first column (30);

second means (84) to pump purified liquid from said second reservoir (80) into said second column (50);

duct means (40) providing inter-communication between upper regions of said first and second columns said duct means being equipped with check valve devices (41) adapted and arranged when open to permit flow of vaporized liquid between the columns while when closed to prevent intermingling of said pure and impure liquids in said respective columns and said inter-connecting duct;

means (33, 53) to vent said first and second columns, in upper regions thereof whereby, on operation of said pump means (24, 84) said columns (30, 50) can be sequentially entirely filled with liquid, first one column and then the other, with non-condensables being substantially entirely driven off through said vent means from the upper regions of the columns and from the duct means (40) inter-connecting the columns, with intermingling of the impure and purified liquids being prevented when said check valve (41) is maintained closed.

5. Apparatus according to claim 4, wherein at least some of the interior surfaces (294) of the first and second columns and of the inter-communicating duct means (40) are provided with a coating which resists build up of solids on said surfaces.

6. Apparatus according to either of claims 4 or 5 and including means (290) for scrubbing or scraping selected regions of the interior surfaces of said first column (30).

7. Apparatus according to any one of claims 4 to 6, wherein the columns (30, 50) when filled provide a liquid head exceeding 9 metres and preferably 12 to 20 metres.

8. Apparatus according to any one of claims 4 to 7 including means for sensing temperatures or pressure or both at predetermined locations and operable to start pumps or open vents such as to bring temperature or pressures or both of liquids or vapours to predetermined levels.

9. Apparatus according to any one of claims 4 to 8, wherein pressure sensor means with predetermined pressure settings are located to sense the pressure of liquid to be purified in the first column and to sense the pressure of liquid in said second column and when all noncondensables have been vented to the atmosphere, said sensor means being adapted and arranged sequentially to turn off the pump means to allow said first liquid in said first column to fall by gravity thus preventing mixing of said first liquid with said second liquid.

10. Apparatus according to any preceding claim and including means (426' or 486') for supplying liquid at predetermined temperatures to an upper region within one or both of the columns in order to promote evaporation or condensation within the selected column.

11. Apparatus according to claim 10, wherein the liquid so supplied is sprayed downwardly in the selected column.

**Patentansprüche**

1. Verfahren zum Destillieren von Flüssigkeiten, insbesondere zur Reinigung von Wasser, wobei ein barometrisches Destillationssystems verwendet wird, das aufweist

eine erste Kolonne (30) mit vorgegebener barometrischer Höhe und mit einer Einrichtung zur Energiezufuhr (31);

eine zweite Kolonne (50) mit vorgegebener barometrischer Höhe mit einer Einrichtung zum Abweisen von Energie (150);

mit einem ersten Reservoir (20) für zu reinigende Flüssigkeit und einem zweiten Reservoir (80) für gereinigte Flüssigkeit;

eine Einrichtung für wahlweisen Flüssigkeitsaustausch zwischen dem unteren Bereich der ersten Kolonne (30) und dem genannten ersten Reservoir (20) sowie zwischen dem unteren Bereich der zweiten Kolonne (50) und dem zweiten Reservoir (80);

eine erste Pumpeinrichtung (24) zum Fördern von Flüssigkeit aus dem ersten Reservoir in die erste Kolonne und eine zweite Pumpeinrichtung (84) für Fördern von Flüssigkeit aus dem zweiten Reservoir in die zweite Kolonne und

Leitungsmittel (40), die eine Verbindung zwischen den oberen Bereichen der ersten und zweiten Kolonnen ermöglichen und die mit einem Absperrventil (41) ausgerüstet sind, das in Öffnungsstellung einen Übergang verdampfter Flüssigkeit zwischen den Kollenen ermöglicht und in Schleißstellung einen Übergang von Flüssigkeit zwischen diesen beiden Kolonnen, ausschließt sowie Mittel (33, 53), um die ersten und zweiten Kolonnen in deren oberen Bereichen zu entlüften,

dadurch gekennzeichnet, daß eine der genannten Pumpeinrichtungen (24 oder 84) verwendet wird, um eine der genannten Kolonnen mit Flüssigkeit vom zugehörigen Reservoir zu füllen und daß gleichzeitig der obere Bereich dieser Kolonne entlüftet wird, wobei das Absperrventil (41) betätigt wird und geschlossen ist, um einen Übergang von Flüssigkeit in die andere Kolonne zu vermeiden, und daß anschließend, während das Absperrventil (41) geschlossen gehalten wird, die andere der Pumpeinrichtungen (24 oder 84) benutzt wird, um die andere Kolonne mit Flüssigkeit aus ihrem zugehörigen Reservoir zu füllen und gleichzeitig der obere Bereich dieser anderen Kolonne atmosphärisch belüftet wird, und daß anschließend die oberen Bereiche beider Säulen gegenüber der Atmosphäre abgeschlossen werden und die Flüssigkeitsspiegel in beiden Kolonnen unter der Gravitations absinken, wobei sich ein Teilvakuum im oberen Bereich dieser beiden Kolonnen einstellt, daß das Absperrventil geöffnet wird, um einen Dampfübergang zwischen den evakuierten oberen Bereichen der Kolonnen zu ermöglichen, wobei sich ein Temperaturgradient zwischen den beiden Flüssigkeitsspiegeln in den Kolonnen einstellt, Flüssigkeit aus der ersten Kolonne in den oberen Bereich dieser Kolonne verdampft und der Dampf dann durch die Leitungsmittel mit zwischengeschaltetem Absperrventil hindurchtritt und in der kühleren der beiden Kolonnen kondensiert.

2. Verfahren nach Anspruch 1, bei dem die Kolonnen aufeinanderfolgend gefüllt und entlüftet werden und anschließend ihre oberen Bereiche in regelmäßigen oder unregelmäßigen Intervallen teilweise evakuiert werden, um nicht kondensierbare Gase auszustoßen und abzuleiten, so daß eine Ansammlung derartiger Gase vermieden wird.

3. Verfahren nach Anspruch 1, bei dem die erreichte Druckhöhe der Flüssigkeit, wenn die erste und die zweite Kolonne mit der jeweiligen Flüssigkeit gefüllt sind, vor Absperren des oberen Bereiches der Kolonnen gegenüber Atmosphäre und dem nachfolgenden Abfall der Flüssigkeitsspiegel unter Gravitation für die zumindest teilweise Evakuierung der oberen Bereiche im Inneren der Kolonnen zwölf Meter übersteigt.

4. Vorrichtung zur barometrischen Destillation zur Durchführung des Verfahrens nach Anspruch 1, die aufweist

eine erste Kolonne (30) einer vorgegebenen barometrischen Höhe mit einer Einrichtung zur Energiezufuhr (31);

eine zweite Kolonne (50) vorgegebener barometrischer Höhe mit einer Einrichtung zum Abweisen von Energie (51);

eine erstes Reservoir (20) für zu reinigende Flüssigkeit und ein zweites Reservoir (80) für gereinigte Flüssigkeit und Einrichtungen (22, 24, 26) für eine wahlweise Flüssigkeitsverbindung zwischen dem unteren Innenbereich der ersten Kolonne (30) und dem ersten Reservoir (20) und zwischen dem unteren Innenbereich der zweiten Kolonne (50) und dem zweiten Reservoir (80);

eine erste Pumpeinrichtung zum Fördern zu reinigender Flüssigkeit aus dem ersten Reservoir (20) in die erste Kolonne (30);

eine zweite Pumpeinrichtung (84) zum Fördern gereinigter Flüssigkeit aus dem zweiten Reservoir (80) in die zweite Kolonne (50);

Leitungsmittel (40), die eine Verbindung zwischen den oberen Bereichen der ersten und der zweiten Kolonne ermöglichen und die Absperrventile (41) aufweisen, die so ausgestaltet und angeordnet sind, daß sie im Öffnungszustand einen Austausch verdampfter Flüssigkeit zwischen den Kolonnen ermöglichen, aber im Schließzustand eine Vermischung von gereinigter und ungereinigter Flüssigkeit in den entsprechenden Kolonnen und den Verbindungsmitteln unterbinden und Einrichtungen (33, 53) zum Belüften der ersten und der zweiten Kolonne in deren oberen Bereichen, wobei, bei Betätigung der Pumpeinrichtungen (24, 84) die Kolonnen (30, 50) aufeinanderfolgend, zunächst die eine und danach die andere, vollständig mit Flüssigkeit gefüllt werden und die nicht kondensierbaren Anteile im wesentlichen vollständig durch die Entlüftungseinrichtung aus den oberen Bereichen der Kolonnen und den die Kolonnen verbindenden Leistungsmitteln (40) herausgedrückt werden, wobei eine Vermischung von ungereinigter und gereinigter Flüssigkeit verhindert wird, wenn das Absperrventil (41) geschlossen gehalten ist.

5. Vorrichtung nach Anspruch 4, bei der zumindest einige Innenflächen (294) der ersten und zweiten Kolonnen und der Leitungsmittel (40) mit einem Überzug versehen sind, der eine Anlagerung von Feststoffen auf diesen Oberflächen erschwert.

6. Vorrichtung nach Anspruch 4 oder 5, die eine Einrichtung (290) zum Schrubben oder Schaben ausgewählter Bereiche der inneren Flächen der ersten Kolonne (30) aufweist.

7. Vorrichtung nach einem der Ansprüche 4 bis 6, bei der die Kolonnen (30, 50) im gefüllten Zustand einen Flüssigkeitsdruck über neun Metern und vorzugsweise zwölf bis zwanzig Metern ausbilden.

8. Vorrichtung nach einem der Ansprüche 4 bis 7, mit Temperatur- und/oder Druckfühlern an vorgegebenen Orten, die die Pumpeinrichtungen oder Entlüftungen so steuern, daß die Temperatur und/oder die Drucke beider Flüssigkeiten oder Gase auf vorgegebene Werte gebracht werden.

9. Vorrichtung nach einem der Ansprüche 4 bis 8, bei der Druckfühler mit vorgegebener Druckeinstellung vorgesehen sind, um den Flüssigkeitsdruck der zur reinigenden Flüssigkeit in der ersten Kolonne und den Flüssigkeitsdruck in der zweiten Kolonne zu erfassen und um, wenn alle nicht kondensierbaren Bestandteile nach außen herausgedrückt worden sind, nacheinander die Pumpeinrichtungen abzuschalten und die erste Flüssigkeit in der ersten Kolonne durch Gravitation abfallen zu lassen, wodurch ein Mischen der ersten und der zweiten Flüssigkeit vermieden wird.

10. Vorrichtung nach einem der vorhergehenden Ansprüche, die Einrichtung (426' und 486') für die Zufuhr von Flüssigkeit vorgegebener Temperatur in einen oberen Bereich innerhalb einer oder beider Kolonnen aufweist, um eine Verdampfung oder Kondensation innerhalb der jeweiligen Kolonne zu verbessern.

11. Vorrichtung nach Anspruch 10, bei der die so zugeführte Flüssigkeit nach unten in die ausgewählte Kolonne gesprüht wird.

**Revendications**

1. Un procédé de distillation de liquides, en particulier de purification de l'eau, qui utilise un système de distillation barométrique comprenant

une première colonne (30) de hauteur barométrique prédéterminée, comprenant des moyens d'application d'énergie (31);

une seconde colonne (50) de hauteur barométrique prédéterminée, comprenant des moyens d'extraction d'énergie (51);

et comprenant un premier réservoir (20) pour du liquide impur et un second réservoir (80) pour du liquide purifié;

et des moyens destinés à établir sélectivement une intercommunication pour le liquide entre la région intérieure inférieure de la première colonne (30) et le premier réservoir (20) et entre la région intérieure inférieure de la seconde colonne (50) et le second réservoir (80);

une première pompe (24) destinée à pomper du liquide du premier réservoir vers la première colonne, et

une seconde pompe (84) destinée à pomper du liquide du second réservoir vers la seconde colonne,

une structure de conduit (40) établissant une intercommunication entre des régions supérieures des première et seconde colonnes, cette structure de conduit étant équippée d'une clapet de retenue (41) qui peut s'ouvrir pour permettre la circulation du liquide vaporisé entre les colonnes et qui peut se fermer pour empêcher la circulation du liquide entre les colonnes; et des moyens (33, 53) destinés à faire communiquer avec l'atmosphère les régions supérieures des première et seconde colonnes;

le procédé comprenant les opérations suivantes:

on utilise l'une des pompes (24 ou 84) pour emplir l'une des colonnes avec du liquide provenant du réservoir associé, et on fait simultanément communiquer avec l'atmosphère la partie supérieure de cette colonne, le clapet de retenue (41) fonctionnant et se fermant pour empêcher le circulation du liquide vers l'autre colonne, et ce clapet de retenue (41) restant ensuite fermé,

on utilise l'autre pompe (24 ou 84) pour emplir l'autre colonne avec du liquide provenant de son réservoir associé, et on fait simultanément communiquer eavec l'atmosphère la région supérieure de cette autre colonne;

on isole ensuite de l'atmosphère les régions supérieures des deux colonnes et on laisse descendre les collonnes de liquide dans les deux colonnes, sous l'effet de la gravité, de façon à établir un vide partiel dans les régions supérieures des deux colonnes; et

on ouvre le clapet de retenue pour permettre le passage de la vapeur entres les régions supérieures des colonnes dans lesquelles on a fait le vide, grâce à quoi lorsqu'une différence de température s'ètablit entre les deux colonnes de liquide dans les colonnes, le liquide contenu dans la première colonne s'évapore dans la région supérieure de la première colonne, la vapeur passe ensuite par la structure de conduit d'intercommunication et par le clapet de retenue qu'elle contient, et elle se condense dans la seconde colonne, plus froide.

2. Procédé selon la revendication 1, dans lequel on procède séquentiellement au remplissage et à la mise en communication des collonnes avec l'atmosphère, puis on fait partiellement le vide dans leurs régions supérieures, à des intervalles réguliers ou irréguliers, dans le but de faire communiquer avec l'atmosphère et d'évacuer des gaz non condensables, afin d'éviter une accumulation indésirable de ces gaz.

3. Procédé selon la revendication 1, dans lequel lorsqu'on emplit les première et seconde colonnes avec le liquide respectif, les hauteurs de liquide résultantes dépassent 12 mètres avant l'isolation de la région supérieure des colonnes vis-à-vis de l'atmosphère, et la diminution des hauteurs qui s'ensuit, sous l'effet de la gravité, pour faire au moins partiellement le vide dans les régions supérieures des parties intérieures des colonnes.

4. Un appareil de distillation barométrique destiné à la mise en oeuvre du procédé défini dans la revendication 1, qui comprend:

une première colonne (30) de hauteur barométrique prédéterminée comprenant des moyens d'application d'énergie (31);

une seconde colonne (50) de hauteur barométrique prédéterminée comprenant des moyens d'extraction d'énergie (51);

et comprenant un premier réservoir (20) pour un liquide impur et un second réservoir (80) pour un liquide purifié; et des moyens (22, 24, 26) destinés à établir sélectivement une intercommunication pour le liquide entre la région intérieure inférieure de la première colonne (30) et le premier réservoir (20), et entre la région intérieure inférieure de la seconde colonne (50) et le second réservoir (80);

des premiers moyens (24) destinés à pomper un liquide impur du premier réservoir (20) vers la première colonne (30);

des seconds moyens (84) destinés à pomper du liquide purifié du second réservoir (80) vers la seconde colonne (50);

une structure de conduit (40) destinée à assurer l'intercommunication entres des régions supérieures des première et seconde colonnes, cette structure de conduit étant équipée de clapets de retenue (41) conçus de manière à permettre la circulation du liquide vaporisé entre les colonnes lorsqu'ils sont ouverts, tandis que lorsqu'ils sont fermés ils empêchent le mélange des liquides pur et impur dans les colonnes respectives et dans le conduit d'intercommunication;

des moyens (33, 53) destinés à mettre en communication avec l'atmosphère les parties supérieures des première et seconde colonnes, grâce à quoi pendant le fonctionnement des moyens de pompage (24, 84), ces colonnes (30, 50) peuvent s'emplir successivement de liquide, une colonne en premier et ensuite l'autre, des substances non condensables étant pratiquement entièrement évacuées des régions supérieures des colonnes et de la structure de conduit (14) assurant l'intercommunication entre les colonnes, par l'intermédiaire des moyens de mise en communication avec l'atmosphère, tandis que les liquides impur et purifié ne peuvent pas se mélanger lorsque le clapet de retenue (41) est maintenu fermé.

5. Appareil selon la revendication 4, dans lequel certaines au moins des surfaces intérieures (294) des première et seconde colonnes et de la structure de conduit d'intercommunication (40) sont munies d'un revêtement qui s'oppose à l'accumulation des matières solides sur ces surfaces.

6. Appareil selon l'une quelconque des revendications 4 ou 5 et comprenant des moyens (290) destinés à nettoyer ou à racler des régions sélectionnées des surfaces intérieures de la première colonne (30).

7. Appareil selon l'une quelconque des revendications 4 à 6, dans lequel les colonnes (30, 50) procurent, lorsqu'elles sont emplies, une hauteur de liquide dépassant 9 mètres et qui est de préférence de 12 à 20 mètres.

8. Appareil selon l'une quelconque des revendications 4 à 7, comprenant des moyens destinées à détecter des températures ou des pressions, ou les deux, à des emplacements prédéterminés, et capables de faire démarrer des pompes ou d'ouvrir des évents de façon à amener à des niveaux prédéterminées les températures ou les pressions, ou les deux, de liquides ou de vapeurs.

9. Appareil selon l'une quelconque des revendications 4 à 8, dans lequel des moyens capteurs de pression ayant des réglages de pression prédéterminés sont placés de façon à détecter la pression du liquide à purifier dans la première colonne et à détecter la pression du liquide dans la seconde colonne, et lorsque toutes les substances non condensables ont été évacuées vers l'atmosphère, ces moyens capteurs étant conçus de façon à arrêter séquentiellement les moyens de pompage pour permettre au premier liquide contenu dans la première colonne de descendre par gravité, ce qui empêche le mélange du premier liquide avec le second liquide.

10. Appareil selon l'une quelconque des revendications précédentes et comprenant des moyens (426' ou 486') destinés à débiter du liquide à une température prédéterminée dans une région supérieure dans l'une des colonnes, ou les deux, afin de favoriser l'évaporation ou la condensation dans la collone sélectionnée.

11. Appareil selon la revendication 10, dans lequel le liquide qui est ainsi débité est pulvérisé vers le bas dans la colonne sélectionnée.

0 048 596

Fig.3

Fig.1

1

Fig.2

**0 048 596**

FIG. 4

FIG. 5